# DEMANDE DE BREVET EUROPEEN

(11) **EP 4 603 994 A1**
(43) Date de publication de la demande: **20.08.2025**
(21) Numéro de dépôt: 24305252.9
(22) Date de dépôt: 14.02.2024
(51) Int. Cl.: G06F 21/41, H04L 9/32, H04L 9/40, H04L 67/56

(54) **PROCÉDÉ ET SYSTÈME DE GESTION D'ACCÈS À UNE APPLICATION LOCALE SE TROUVANT AU SEIN D'UN RÉSEAU INFORMATIQUE ET NE PRENANT PAS EN CHARGE UNE AUTHENTIFICATION PAR FÉDÉRATION D'IDENTITÉ**

(71) Demandeur: BULL SAS, 78340 Les Clayes-Sous-Bois (FR)
(72) Inventeur: GUIONNEAU, Christophe, 38000 Grenoble (FR)
(74) Mandataire: IPAZ

(57) **Abrégé**

L'invention concerne un procédé (100) de gestion d'accès à une application locale se trouvant dans un réseau informatique, ledit procédé (100) comprenant une phase d'authentification (120) comprenant les étapes suivantes :
-authentification (130) dudit utilisateur par un serveur IDAAS se trouvant hors dudit réseau informatique ;
- en cas d'authentification réussie, génération (132) d'un message authentification comprenant une première liste d'applications autorisées pour ledit utilisateur ;
-transmission (134) dudit message d'authentification vers un serveur d'authentification local se trouvant dans ledit réseau ; et
- lorsque ladite application locale est mentionnée dans ladite première liste, transmission (142) d'une donnée d'autorisation associée audit utilisateur pour ladite application, à un reverse-proxy gérant l'accès dudit utilisateur à ladite application.

Elle concerne en outre un programme d'ordinateur et un système mettant en oeuvre un tel procédé.

## Description

La présente invention concerne un procédé de gestion d'accès à une application, dite application locale, se trouvant au sein d'un réseau informatique et ne prenant pas en charge une authentification par fédération d'identité. Elle concerne également un programme d'ordinateur et un système mettant en oeuvre un tel procédé.

Le domaine de l'invention est le domaine de l'authentification d'un utilisateur auprès d'un serveur IDAAS en vue d'accéder à une ou plusieurs applications locales se trouvant dans un réseau informatique et ne proposant pas une authentification par fédération d'identité.

### État de la technique

Les applications et les services utilisent de plus en plus une authentification par fédération d'identité. En résumé, l'utilisateur s'authentifie auprès d'un serveur d'authentification, également appelé fournisseur d'identité, et obtient une preuve d'authentification. Cette preuve d'authentification est ensuite utilisée pour accéder à plusieurs services/applications, évitant une authentification individuelle pour chaque service/application à chaque utilisateur.

Pour les utilisateurs d'un réseau informatique, tel qu'un réseau d'entreprise, cette authentification peut être réalisée par un fournisseur d'identité, ou un serveur d'authentification, local se trouvant dans ledit réseau informatique. Une autre alternative est d'utiliser un fournisseur d'identité en mode SaaS, appelé IDAAS pour « Identity As A Service », se trouvant sur un serveur, dit serveur IDAAS, externe au réseau informatique de l'entreprise.

Or, toutes les applications se trouvant dans le réseau d'entreprise ne supportent pas, ne prennent pas en charge, la fédération d'identité, et donc l'utilisation d'un serveur IDAAS : soit parce que ces applications ne supportent pas les protocoles utilisés pour la fédération d'identité, tels que les protocoles SAML, OIDC, etc., soit parce que ces applications sont des applications qui initialement étaient prévues pour un usage uniquement au sein du réseau informatique. Pour utiliser une solution de fédération d'identité avec une application locale ne prenant pas en charge la fédération d'identité, une solution consiste à utiliser un serveur d'authentification local et un reverse-proxy disposé entre ladite application locale et ledit serveur d'authentification local. Le reverse-proxy expose une URL d'accès à l'application locale et le serveur d'authentification local gère l'authentification par fédération d'identité en lien avec un serveur IDAAS. Cette solution, bien que couramment utilisée présente à une limite non négligeable : vu du serveur IDAAS, le reverse-proxy est une seule et unique application, indépendamment du nombre d'applications gérées par ledit reverse-proxy.

Pour pallier cette limitation, il est possible d'instancier plusieurs serveurs d'authentification locaux, chacun correspondant à une application. Cette solution, en plus de devenir complexe à gérer lorsque le nombre d'applications augmente, rend impossible l'utilisation de l'authentification fédérée pour les applications gérées par différents serveurs d'authentification locaux.

Un but de la présente invention est de remédier à au moins un des inconvénients précités.

Un autre but de la présente invention est de proposer une solution plus efficace et moins complexe d'authentification d'un utilisateur auprès d'un serveur IDAAS en vue d'accéder à une application locale, ne proposant pas une authentification par fédération d'identité.

### Exposé de l'invention

L'invention permet d'atteindre au moins l'un des buts précités par un procédé de gestion d'accès à une application, dite locale, se trouvant au sein d'un réseau informatique et ne prenant pas en charge une authentification par fédération d'identité, ledit procédé comprenant une phase d'authentification comprenant les étapes suivantes :
- authentification dudit utilisateur par un serveur IDAAS se trouvant à l'extérieur dudit réseau informatique ;
- en cas d'authentification réussie, génération d'un message authentification comprenant :
   ▪ une liste, dite première liste, d'applications autorisées pour ledit utilisateur, et
   ▪ pour chaque application, une donnée d'autorisation associée audit utilisateur ;
- transmission dudit message d'authentification vers un serveur d'authentification local, se trouvant dans ledit réseau informatique ;
- lorsque ladite application locale est mentionnée dans ladite première liste, transmission de la donnée d'autorisation associée audit utilisateur pour ladite application à un reverse-proxy gérant l'accès dudit utilisateur à ladite application.

Ainsi, l'invention propose une solution permettant d'utiliser la fédération d'identité pour l'accès à une application locale non prenant pas en charge une authentification par fédération d'identité. Pour ce faire, l'invention propose d'utiliser d'une part un reverse-proxy associé à ladite application locale et un serveur d'authentification local, et d'autre part un serveur IDAAS pour authentifier l'utilisateur selon un protocole d'identification par fédération d'identité, tel que par exemple le protocole SAML ou le protocole OIDC.

De manière innovante, une authentification réussie de l'utilisateur auprès du serveur IDAAS, déclenche la transmission, vers le serveur d'authentification local, d'un message d'authentification qui comprend :
- la liste de toutes les applications auxquelles l'utilisateur a le droit d'accéder, et
- pour chacune de ces applications, le droit d'accès attribué à l'utilisateur pour ladite application.
Ce message d'authentification est transmis au serveur d'authentification local pour autoriser ou non l'utilisateur à accéder à l'application locale.

En effet, le serveur IDAAS ne connait pas l'application locale à laquelle l'utilisateur souhaite accéder, puisque ladite application locale ne prend pas en charge la fédération d'identité. Par conséquent, lorsque l'utilisateur est authentifié par le serveur IDAAS, ledit serveur IDAAS ne connait que le serveur d'authentification local et n'a aucune idée de l'application à laquelle l'utilisateur souhaite accéder. Cette information est connue uniquement du serveur d'authentification local. Ce dernier reçoit la liste de toutes les applications auxquels l'utilisateur a le droit d'accéder, avec les droits associés, et c'est ce serveur d'authentification local qui peut déterminer si l'utilisateur peut accéder ou non à l'application locale à laquelle il demande à avoir accès.

Ainsi, il est possible de gérer, avec fédération d'identité et avec un même serveur d'authentification local, l'accès à plusieurs applications locales qui ne gèrent pas la fédération d'identité. Avec l'invention, il n'est donc pas nécessaire de déclarer un serveur d'authentification local pour chaque application, comme cela est le cas dans les solutions de l'état de la technique, ce qui est plus efficace et moins complexe.

L'application peut être tout type d'application, telle que par exemple une application bureautique, une application de comptabilité, une application de dessin industriel, une application de finance, une application de messagerie, etc.

L'accès à l'application peut être réalisée par un navigateur Internet en utilisant l'adresse URL de ladite application telle qu'affichée par le reverse-proxy associé à ladite application. Alternativement, l'accès à l'application peut être réalisée par un client d'accès dans lequel est configuré ladite adresse URL.

Suivant des modes de réalisation, le procédé selon l'invention peut comprendre une étape de choix, ou d'indication, par l'utilisateur de l'application locale à laquelle il souhaite accéder.

Ce choix peut être réalisée de différentes manières, par exemple en saisissant manuellement l'adresse URL de l'application, par sélection d'un bouton associé à ladite application, par sélection d'un raccourci de ladite application, par sélection d'une icône de ladite application, etc.

Suivant une première variante, l'étape de choix de l'application locale peut être réalisée **avant** l'étape d'authentification.

Dans ce cas, l'utilisateur indique l'application locale à laquelle il souhaite accéder avant d'être authentifié par le serveur IDDAS.

Dans ce cas, le choix/indication de l'application locale peut être réalisée de différentes manières :
- par saisie d'une adresse URL de l'application dans un navigateur Internet,
- par sélection d'un bouton associé à ladite application ou à ladite adresse U RL,
- par lancement d'un client d'accès à ladite application locale ;
- etc.

Dans cette première variante, le procédé selon l'invention peut comprendre, suite à l'étape de choix de l'application locale, les étapes suivantes :
- redirection dudit utilisateur vers le serveur d'authentification local, par le reverse-proxy, et
- redirection dudit utilisateur vers le serveur IDAAS, par le serveur d'authentification local ;
en vue de la réalisation de l'étape d'authentification.

Dans cette première variante, ces étapes de redirection ont lieu avant l'étape d'authentification pour rediriger l'utilisateur vers le serveur IDAAS en vue de son authentification.

Ces redirections peuvent être réalisées en utilisant un identifiant de transaction, ou un cookie de session, permettant de garder la trace de l'utilisateur.

Dans cette première variante, le serveur IDAAS reçoit, de la part du serveur IDAAS, une demande d'authentification. A ce stade :
- le serveur IDAAS ne connait pas l'application à laquelle l'utilisateur souhaite accéder, ni l'identifiant de l'utilisateur ; et
- le serveur d'authentification local ne connait pas nécessairement l'identifiant de l'utilisateur.
La requête d'authentification reçue du serveur d'authentification local est reliée au domaine du serveur d'authentification local de sorte que le serveur IDAAS ne connaît que ledit domaine du serveur d'authentification local, tel que configuré dans le serveur IDAAS.

Lors de l'authentification auprès du serveur IDAAS, l'utilisateur fournit son identifiant. Lorsque l'authentification est réussie, le serveur IDAAS transmet au serveur d'authentification local, le message d'authentification, par exemple en utilisant le cookie de session ou l'identifiant de transaction. Avec le cookie de session ou l'identifiant de transaction, le serveur d'authentification local peut alors faire le lien entre le message d'authentification, et donc l'utilisateur, et l'application locale à laquelle l'utilisateur demande à avoir accès.

Le serveur d'authentification autorise ou non l'accès audit utilisateur à ladite application en fonction de la première liste et des droits d'accès donnés audit utilisateur, pour chacune des applications listées dans la première liste.

Suivant une deuxième variante, l'étape de choix de l'application locale peut être réalisée **après** l'étape d'authentification, par exemple par sélection de ladite application locale sur le serveur IDAAS.

Dans ce cas, l'utilisateur accède tout d'abord au serveur IDAAS, par exemple par saisie ou sélection d'une adresse URL dudit serveur IDAAS.

Puis, l'étape d'authentification est réalisée : à ce stade l'utilisateur n'a toujours pas indiqué l'application locale à laquelle il souhaite accéder. Après l'étape d'authentification, l'utilisateur a la possibilité d'indiquer, ou de choisir, l'application locale, par exemple parmi les applications listées dans le serveur IDAAS. A ce stade, le message d'authentification n'est toujours pas généré, et ni le reverse-proxy ni le serveur d'authentification n'ont connaissance d'une demande d'accès.

Suivant des modes de réalisation, dans cette deuxième variante, le procédé selon l'invention peut comprendre, suite à l'étape de choix de l'application locale, les étapes suivantes :
- redirection dudit utilisateur vers l'adresse URL de ladite application locale ;
- redirection dudit utilisateur vers le serveur d'authentification local, par le reverse-proxy ; et
- redirection dudit utilisateur vers le serveur IDAAS, par le serveur d'authentification local ;
en vue de la réalisation de l'étape de génération du message d'authentification.

En d'autres termes, une fois authentifié l'utilisateur accède à une page du serveur IDAAS et peut sélectionner, parmi toutes les applications associées au serveur d'authentification locale, celle à laquelle il souhaite accéder. Suite à cette sélection, il est alors redirigé vers l'adresse URL de l'application sélectionnée, cette adresse URL étant préalablement renseignée dans ledit serveur IDAAS. Cette redirection est interceptée par le reverse-proxy, qui redirige l'utilisateur vers le serveur d'authentification local, et qui à son tour, redirige l'utilisateur vers le serveur IDAAS. L'ensemble de ces redirections sont réalisées avec un identifiant de session, ou un cookie de session placé dans le navigateur Internet de l'utilisateur, permettant au serveur IDAAS de reconnaître l'utilisateur lorsqu'il est redirigé vers ledit serveur IDAAS.

Etant donné que l'utilisateur s'est déjà authentifié au niveau du serveur IDAAS, une nouvelle authentification n'est pas nécessaire. Le serveur IDAAS reconnaît l'utilisateur et génère le message d'authentification qu'il transmet au serveur d'authentification local.

Suivant des modes de réalisation, le message d'authentification peut en outre comprendre au moins l'une des données suivantes :
- une liste, dite deuxième liste, d'applications associée au domaine du serveur d'authentification local ; et/ou
- un numéro de version de la configuration du serveur IDAAS.

Au moins une, ou chacune, de ces données peut être utilisée par le serveur IDAAS pour différentes fonctions.

Avantageusement, au moins une de ces données peut être utilisée pour vérifier la synchronisation entre le serveur IDAAS et le serveur d'authentification local.

En effet, tout changement, par exemple une suppression ou un ajout, dans les applications locales gérées par le serveur d'authentification local, dans les utilisateurs, ou dans les droits associés à tel ou tel utilisateur, etc. doit être communiqué au serveur IDAAS, par une mise à jour de la configuration du serveur IDAAS en ce qui concerne ledit serveur d'authentification local. Cette mise à jour peut être réalisée par une synchronisation qui peut être déclenchée dès qu'un décalage est détecté entre ce qui est configuré dans le serveur IDAAS pour le serveur d'authentification local, et la configuration au niveau dudit serveur d'authentification local.

Ce décalage peut être détecté en comparant la deuxième liste telle que connue dans le serveur IDAAS, et tel qu'elle est configurée dans le serveur d'authentification local. Si une différence existe entre ces deux versions de la deuxième liste, une synchronisation peut être déclenchée entre le serveur d'authentification local et le serveur IDAAS.

Alternativement, ou en plus, ce décalage peut être détecté en comparant le numéro de version de la configuration IDAAS tel qu'il est réellement dans le serveur IDAAS au numéro de version de la configuration IDAAS tel qu'il est connu du serveur d'authentification local. Si une différence existe entre ces deux numéros, une synchronisation peut être déclenchée entre le serveur d'authentification local et le serveur IDAAS.

Le procédé selon l'invention peut en outre comprendre, avant la phase d'authentification, une phase d'enregistrement dont le but est de configurer au moins l'un des composants intervenant dans la mise en oeuvre de l'invention.

Suivant des modes de réalisation, la phase d'enregistrement peut comprendre une étape de déclaration/configuration d'un reverse-proxy pour l'application locale. La déclaration/configuration d'un reverse-proxy peut être réalisée de manière classique, connue par la personne du métier.

Alternativement, cette étape peut être réalisée en amont du procédé selon l'invention et peut ne pas faire partie du procédé selon l'invention.

Suivant des modes de réalisation, la phase d'enregistrement peut en outre comprendre une étape de déclaration, au serveur IDAAS, de la première liste.

La première liste peut être communiquée au serveur IDAAS selon toute technique adéquate, par exemple :
- par synchronisation du serveur d'authentification local avec le serveur IDAAS,
- par saisie manuelle par un administrateur,
- par importation d'un fichier de configuration,
- etc.

Alternativement, cette étape peut être réalisée en amont du procédé selon l'invention et peut ne pas faire partie du procédé selon l'invention.

Suivant des modes de réalisation, la phase d'enregistrement peut en outre une étape de déclaration, au serveur IDAAS, de la deuxième liste.

La deuxième liste peut être communiquée au serveur IDAAS selon toute technique adéquate, par exemple :
- par synchronisation du serveur d'authentification local avec le serveur IDAAS,
- par saisie manuelle par un administrateur,
- par importation d'un fichier de configuration,
- etc.

Alternativement, cette étape peut être réalisée en amont du procédé selon l'invention et peut ne pas faire partie du procédé selon l'invention.

La phase d'enregistrement peut comprendre une étape d'enregistrement du serveur d'authentification local, auprès du serveur IDAAS pour la mise en oeuvre d'un mécanisme de fédération d'identité. Cette étape d'enregistrement peut être réalisée de manière classique, conformément à un protocole SAML ou OIDC.

Suivant un exemple de réalisation non limitatif, un administrateur du client IDAAS se connecte à son instance IDAAS et à l'interface de configuration IDAAS. L'administrateur déclare le serveur d'authentification local au travers d'un stepper de configuration dans lequel il entre les données techniques dudit serveur d'authentification local, tels que le nom de son instance. Il obtient en retour une clé d'API et une URL de configuration spécifique à son instance de serveur d'authentification local. L'administrateur saisit dans l'interface de configuration du serveur d'authentification local, l'URL de configuration et la clé d'API, et déclenche l'autoconfiguration du lien de fédération SAML, ou éventuellement OIDC, entre ledit serveur d'authentification local et le serveur IDAAS. Lors de l'autoconfiguration, le serveur d'authentification local échange ses métadonnées SAML avec le serveur IDAAS et obtient les métadonnées SAML du serveur IDAAS. La relation de fédération SAML est établie.

Le principe serait similaire avec le protocole OIDC.

Suivant des modes de réalisation, le reverse-proxy peut être dédié à l'application locale. Dans ce cas, le reverse-proxy est utilisé uniquement pour laite application locale.

Suivant des modes de réalisation, le reverse-proxy peut être commun à l'application locale et à au moins une autre application locale. Dans ce cas, le reverse-proxy exécute un mécanisme de réécriture d'URLs configuré pour ajouter un préfixe d'URL pour chacune desdites applications locales. Un tel reverse-proxy est connu de la personne du métier.

Dans un réseau comprenant plusieurs applications locales pour lesquelles l'accès est géré selon l'invention, le procédé selon l'invention peut utiliser :
- au moins un reverse-proxy dédié à une des applications locales, et
- au moins un reverse-proxy commun à au moins deux des applications locales.

Suivant un autre aspect de la présente invention, il est proposé un programme d'ordinateur comprenant des instructions informatiques, qui lorsqu'elles sont exécutées par ordinateur, mettent en oeuvre les étapes du procédé selon l'invention.

Le programme d'ordinateur peut être en langage machine, en C, C++, JAVA, Python, et plus généralement tout type de langage informatique.

Le programme d'ordinateur peut être un unique programme, ou un ensemble de plusieurs programmes communicants ensemble. Par exemple, le programme d'ordinateur peut comprendre un module IDAAS exécuté au niveau du serveur IDAAS et un module local exécuté au niveau du serveur d'authentification local.

Suivant un autre aspect de la présente invention, il est proposé un système de gestion d'accès à une application, dite locale, se trouvant au sein d'un réseau informatique et ne prenant pas en charge une authentification par fédération d'identité, ledit système comprenant :
- un serveur d'authentification local dans ledit réseau informatique,
- un reverse-proxy dans ledit réseau informatique, et
- un serveur IDAAS ;
configurés pour mettre en oeuvre toutes les étapes du procédé selon l'invention.

Le système selon l'invention peut comprendre, en termes de moyens techniques, matériels et/ou logiciels, au moins une, ou une combinaison quelconque d'au moins deux, des caractéristiques décrites plus haut en référence au procédé selon l'invention, et qui ne sont pas reprises ici par soucis de concision.

### Description des figures et modes de réalisation

D'autres avantages et caractéristiques apparaîtront à l'examen de la description détaillée d'un mode de réalisation nullement limitatif, et des dessins annexés sur lesquels :
- la FIGURE 1 est une représentation schématique d'un exemple de réalisation non limitatif d'un procédé selon l'invention ;
- la FIGURE 2 est une représentation schématique d'un autre exemple de réalisation non limitatif d'un procédé selon l'invention ; et
- la FIGURE 3 est une représentation schématique d'un exemple de réalisation non limitatif d'un système selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à de l'état de la technique antérieur. Cette sélection comprend au moins une caractéristique de préférence fonctionnelle sans détails structurels, ou avec seulement une partie des détails structurels si cette partie est uniquement suffisante pour conférer un avantage technique ou pour différencier l'invention par rapport à l'état de la technique antérieure.

Sur les figures, les éléments communs à plusieurs figures conservent la même référence.

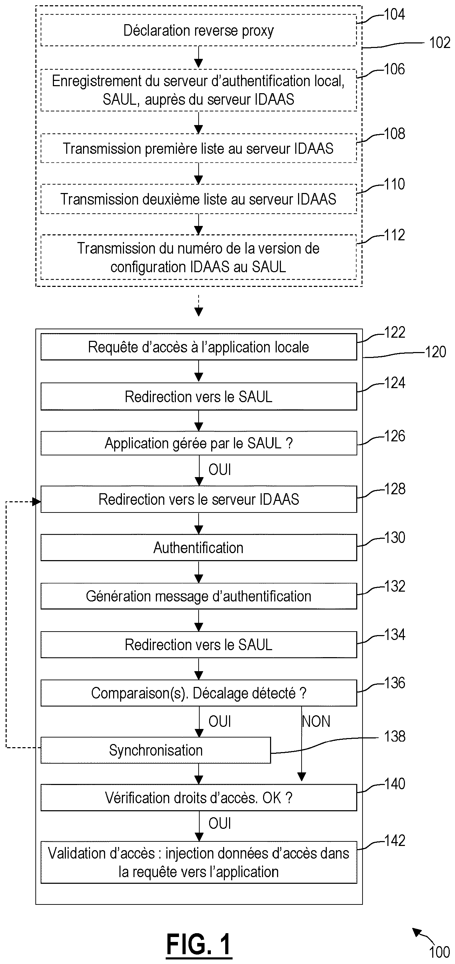

La FIGURE 1 est une représentation schématique d'un exemple de réalisation non limitatif d'un procédé selon l'invention.

Le procédé 100, représenté sur la FIGURE 1, peut être mis en oeuvre pour authentifier, avec un serveur IDAAS, un utilisateur en vue d'autoriser ledit utilisateur, par un mécanisme de fédération d'identité, à accéder à une application locale :
- se trouvant dans un réseau informatique donné, par exemple un réseau d'entreprise, en particulier hébergée sur un serveur d'application se trouvant dans ledit réseau informatique ; et
- ne gérant pas une authentification par fédération d'identité.

Le procédé 100 comprend, de manière optionnelle, une phase d'enregistrement 102 pour la configuration d'au moins un des composants utilisés pour la mise en oeuvre dudit procédé.

La phase d'enregistrement 102 peut comprendre une étape 104, optionnelle, de configuration d'un reverse-proxy, dédié ou non, pour chaque application locale. La déclaration/configuration d'un reverse-proxy peut être réalisée de manière classique, connue par la personne du métier.

Le reverse-proxy est déclaré auprès du serveur d'authentification local, SAUL, gérant l'accès à cette application.

Si une gestion d'accès par fédération d'identité est souhaitée pour cette application, le nom de l'application est ajouté à une liste, dite deuxième liste, indiquant toutes les applications locales pour lesquelles le SAUL met en oeuvre une gestion d'accès par fédération d'identité.

De préférence, l'URL de l'application locale, telle qu'elle est exposée par le reverse-proxy peut aussi être renseignée. Cette URL peut être une URL pointant directement sur l'URL exposée de l'application, au travers du reverse-proxy, ou sur une page d'accueil intermédiaire hébergée par le reverse-proxy. Si aucune adresse n'est renseignée, alors aucun lien ne pourra être affiché dans la page d'accueil IDAAS pour l'utilisateur, mais l'application sera quand même prise en compte et protégée si l'utilisateur connait l'URL par un autre moyen.

Cette deuxième liste peut être modifiée à tout moment pour y ajouter/retirer une application, par exemple par un administrateur du SAUL. Par exemple une nouvelle application locale peut être ajoutée. Une application locale dont le nom se trouvait dans la liste peut être retirée : pour cette dernière le SAUL peut réaliser une authentification classique, sans fédération d'identité.

La phase d'enregistrement 102 peut comprendre une étape 106, optionnelle, d'enregistrement du serveur d'authentification local, SAUL, auprès du serveur IDAAS pour la mise en oeuvre d'un mécanisme de fédération d'identité. Cette étape d'enregistrement peut être réalisée de manière classique, conformément à un protocole SAML ou OIDC.

Suivant un exemple de réalisation non limitatif, un administrateur du client IDAAS se connecte à son instance IDAAS et à l'interface de configuration IDAAS. L'administrateur déclare le SAUL au travers d'un stepper de configuration dans lequel il entre les données techniques dudit SAUL, tels que le nom de son instance. Il obtient en retour une clé d'API et une URL de configuration spécifique à son instance de SAUL. L'administrateur saisit dans l'interface de configuration du SAUL, l'URL de configuration et la clé d'API, et déclenche l'autoconfiguration du lien de fédération SAML, ou éventuellement OIDC, entre ledit SAUL et l'IDAAS. Lors de l'autoconfiguration, le SAUL échange ses métadonnées SAML avec IDAAS et obtient les métadonnées SAML de IDAAS. La relation de fédération SAML est établie. Le principe serait similaire avec le protocole OIDC.

La phase d'enregistrement 102 peut comprendre une étape 108, optionnelle, de transmission au serveur IDAAS, de la première liste indiquant au serveur IDAAS toutes les applications pour lesquelles l'utilisateur a un droit d'accès. Pour chaque application, la nature et/ou le niveau du droit d'accès peu têtre spécifié. Cette première liste peut être communiquée au serveur IDAAS selon toute technique adéquate, par exemple :
- par synchronisation du SAUL avec le serveur IDAAS,
- par saisie manuelle par un administrateur,
- par importation d'un fichier de configuration,
- etc.

Cette première liste peut être modifiée à tout moment, par exemple par une modification de la configuration du serveur IDAAS. Le numéro de configuration du serveur IDAAS est communiqué et mémorisé au niveau du SAUL.

La phase d'enregistrement 102 comprend une étape 110, optionnelle, de déclaration, au serveur IDAAS, de la deuxième liste d'applications associées au SAUL et pour lesquelles une authentification par fédération d'identité est réalisée. Cette deuxième liste peut être communiquée au serveur IDAAS selon toute technique adéquate, par exemple :
- par synchronisation du serveur d'authentification local avec le serveur IDAAS,
- par saisie manuelle par un administrateur,
- par importation d'un fichier de configuration,
- etc.

Lorsque la configuration du SAUL auprès du serveur IDAAS est terminé, que les listes ont été transmises au serveur IDAAS, etc. un numéro de version de configuration du SAUL sur le serveur IDAAS peut être communiqué au SAUL, lors d'une étape optionnelle 112. Ce numéro de version est changé à chaque modification de la configuration du SAUL sur le serveur IDAAS, par exemple lorsque :
- la deuxième liste est modifiée,
- la première liste est modifiée,
- un droit d'accès d'un utilisateur est changé,
- etc.

La phase d'enregistrement 102, et chacune des étapes 104-112, est optionnelle car elle peut être réalisée en amont du procédé 100 selon l'invention et ne pas faire partie du procédé selon l'invention.

De plus, les étapes 104-112 peuvent être réalisées dans un autre ordre que celui dans lequel elles sont décrites ci-dessus.

Le procédé 100 comprend, en outre, une phase 120 d'authentification d'un utilisateur en vue d'un accès à l'application locale, ou à une des applications locales, gérée(s) par le SAUL et associée(s) au domaine du SAUL dans le serveur IDAAS.

Dans l'exemple représenté sur la FIGURE 1, lors d'une étape 122, l'utilisateur émet une demande d'accès à ladite application, avant de s'authentifier auprès du serveur IDAAS.

Par exemple, l'utilisateur saisie l'adresse URL de l'application locale tel que présenté par le reverse-proxy. La saisie de l'URL peut être réalisée manuellement, par sélection d'un bouton raccourci, dans un navigateur Internet exécuté par un appareil utilisateur, ou encore par lancement d'un client d'accès installé et exécuté par ledit appareil utilisateur. Cette demande d'accès génère un cookie de session, ou un identifiant de transaction, ou tout autre identifiant de session permettant d'identifier la session démarrée par l'utilisateur en vue d'accéder à l'application locale.

La demande d'accès est interceptée par le reverse-proxy lors d'une étape 124 et redirigée vers le serveur d'authentification local, SAUL.

La redirection est reçue par le SAUL lors d'une étape 126. Lors de cette étape, le SAUL consulte la deuxième liste indiquant les applications locales pour lesquelles il réalise une authentification avec fédération d'identité.

Si l'application locale ne fait pas partie de la deuxième liste, la demande d'accès est rejetée. Si l'application locale fait partie de la deuxième liste, le SAUL redirige le navigateur/client d'accès vers une page du serveur IDAAS, lors d'une étape 128

Lors d'une étape 130, l'utilisateur s'identifie auprès du serveur IDAAS, selon la technique, ou l'une des techniques, d'identification prise(s) en charge par le serveur IDAAS.

Si l'identification n'est pas réussie, la demande d'accès est rejetée. Si l'identification est réussie le serveur IDAAS génère, lors d'une étape 132, un message d'authentification comprenant une preuve d'authentification, et la première liste indiquant :
- les applications autorisées pour ledit utilisateur, et
- pour chaque application, une donnée d'autorisation associée audit utilisateur, tel que par exemple une donnée indiquant un droit d'accès accordé à l'utilisateur pour ladite application.

Optionnellement, le message d'authentification peut en outre comprendre :
- la deuxième liste d'applications pour lesquelles le SAUL gère une authentification par fédération d'identité, et/ou
- le numéro de la version de configuration du SAUL dans le serveur IDAAS.
Au moins une de ces données peut être utilisée pour détecter un décalage de configuration entre le serveur d'authentification local, SAUL, et tel qu'il est configuré dans le serveur IDAAS et déclencher une synchronisation desdits serveurs entre eux, pour pallier ledit décalage de configuration.

Lors d'une étape 134, l'utilisateur, c'est à dire son navigateur ou le client d'application, est redirigé vers le serveur SAUL avec le message d'authentification.

Lors d'une étape optionnelle 136, le SAUL compare :
- la deuxième liste se trouvant dans le message d'authentification reçu à la deuxième liste telle que mémorisée dans ledit SAUL ; et/ou
- le numéro de la version de configuration au numéro de version de configuration mémorisé dans le SAUL.
Si un décalage est trouvé dans au moins une de ces comparaisons, cela veut dire qu'il y a un décalage dans la configuration réelle du SAUL, et celle mémorisée dans le serveur IDAAS.

Dans ce cas, lors d'une étape optionnelle 138, le SAUL déclenche une synchronisation entre le serveur SAUL et le serveur IDAAS pour pallier le décalage détecté lors de l'étape 136.

Suite à la synchronisation, le SAUL peut optionnellement rediriger l'utilisateur sur le serveur IDAAS pour nouvelle authentification. Dans ce cas, le procédé reprend à l'étape 130.

Lors d'une étape 140 le SAUL vérifie si l'application locale à laquelle l'utilisateur veut accéder fait partie des applications listées dans la première liste, et le cas échéant, le droit d'accès attribué à l'utilisateur pour cette application.

Si ce n'est pas le cas, la demande d'accès est rejetée.

Si c'est le cas, le SAUL injecte la ou les données d'autorisation dans les requêtes à destination de l'application en aval du reverse-proxy, de sorte que l'utilisateur peut accéder à l'application locale, lors d'une étape 142.

Bien entendu, le procédé 100 peut comprendre d'autres étapes que celles décrites ici. Dans certaines variantes, une ou plusieurs des étapes indiquées comme optionnelles peuvent être réalisées, ou ignorées.

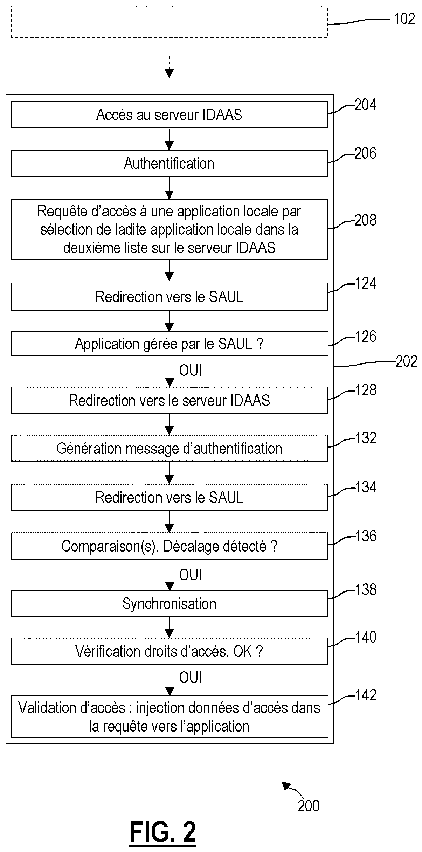

La FIGURE 2 est une représentation schématique d'un exemple de réalisation non limitatif d'un procédé selon l'invention.

Le procédé 200, représenté sur la FIGURE 2, peut être mis en oeuvre pour authentifier, avec un serveur IDAAS, un utilisateur en vue d'autoriser ledit utilisateur, par un mécanisme de fédération d'identité, à accéder à une application locale :
- se trouvant dans un réseau informatique donné, par exemple un réseau d'entreprise, par exemple hébergée sur un serveur d'application se trouvant dans ledit réseau informatique ; et
- ne gérant pas une authentification par fédération d'identité.

Le procédé 200 peut comprendre la phase optionnelle d'enregistrement 102.

Le procédé 200 comprend en outre une phase d'authentification 202 différente par rapport à la phase d'authentification 120 du procédé 100 de la FIGURE 1.

Dans le procédé 200, la phase d'authentification 202 comprend une étape 204 lors de laquelle l'utilisateur accède au serveur IDAAS, par exemple par saisie d'une URL dudit serveur IDAAS dans un navigateur Internet exécuté par l'appareil utilisateur. Lors de l'étape 204, l'utilisateur accède au serveur IDAAS sans passer par le revers-proxy ou le SAUL, à la différence du procédé 100 de la FIGURE 1.

Puis, lors d'une étape 206, une authentification de l'utilisateur est réalisée sur le serveur IDAAS de manière similaire ou identique à l'étape 130 du procédé 100 de la FIGURE 1. A ce stade, on ne connait pas encore l'application locale à laquelle l'utilisateur souhaite accéder.

Lorsque l'authentification est réussie, l'utilisateur accède, lors d'une étape 208, à une liste d'applications pour lesquelles le SAUL gère un accès par fédération d'identité, à savoir la deuxième liste. Dans cette deuxième liste, l'utilisateur sélectionne l'application locale à laquelle il souhaite accéder. Cette sélection vaut requête d'accès à ladite application locale. La sélection de l'application dirige l'utilisateur, et en particulier son navigateur, vers le reverse-proxy lors de l'étape 208.

Puis les étapes 124-128 sont réalisées pour rediriger l'utilisateur du reverse-proxy vers le SAUL, puis du SAUL vers le serveur IDAAS.

Lorsque l'utilisateur se retrouve à nouveau sur le serveur IDAAS, et étant donné que l'utilisateur a déjà été authentifié lors de l'étape 206, une nouvelle authentification n'est pas nécessaire et le serveur IDAAS reconnaît ledit utilisateur, par exemple à un cookie de session ou un identifiant de transaction.

Le message d'authentification est généré lors de l'étape 132, puis les étapes 134-142, telles que décrites plus haut, sont réalisées.

Les procédés 100 et 200 comprennent une phase 102 d'enregistrement optionnelle, car elle peut être réalisée en amont du procédé et ne pas faire partie des procédés 100 et 200.

De plus, le cas échéant, la phase 102 d'enregistrement peut être réalisée juste avant une phase d'authentification 120, respectivement 202, de sorte que ladite phase d'authentification 120, respectivement 202, est mise en oeuvre immédiatement après, ou dès la fin, de ladite phase d'enregistrement 102. Alternativement, la phase d'enregistrement 102 peut être réalisée bien avant la phase d'authentification 120, respectivement 202, de sorte que ladite phase d'authentification 120, respectivement 202, n'est pas mise en oeuvre juste après, ou dès la fin, de ladite phase d'enregistrement 102 et une durée non négligeable s'écoule entre la fin de ladite phase d'enregistrement 102 et ladite phase d'authentification 120, respectivement 202.

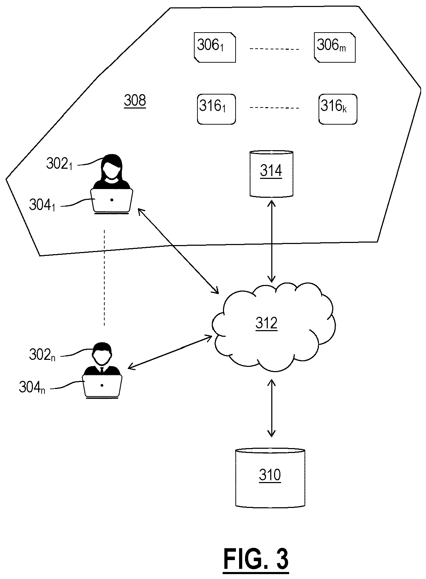

La FIGURE 3 est une représentation schématique d'un exemple de réalisation non limitatif d'un système selon l'invention.

Le système 300 représenté sur la FIGURE 3, peut être utilisé pour mettre en oeuvre un procédé selon l'invention et en particulier, le procédé 100 de la FIGURE 1 ou le procédé 200 de la FIGURE 2.

Le système 300, représenté sur la FIGURE 3, peut être utilisé pour la gestion de l'accès d'utilisateurs 302₁-302ₙ utilisant des appareils utilisateurs 304₁-304ₙ, à une ou plusieurs applications locales 306₁-306ₘ se trouvant dans un réseau informatique 308. Au moins une application locale 306ᵢ peut être exécutée sur un serveur (non représenté) se trouvant dans le réseau 308. Au moins une partie des utilisateurs 302₁-302ₙ souhaitant accéder aux applications locales 306₁-306ₘ, et donc au moins une partie des appareils 304₁-304ₙ, peuvent se trouver dans le réseau 308 ou à l'extérieur du réseau 308.

Le système 300 comprend un serveur IDAAS 310 se trouvant à l'extérieur du réseau local 308 et en communication avec ledit réseau local 308 au travers d'un réseau de communication 312, tel que par exemple le réseau Internet.

Le système 300 comprend en outre un serveur d'authentification local, SAUL, 314 se trouvant dans le réseau 308.

De plus, le système 300 comprend en outre un ou plusieurs reverse-proxy 316₁-316ₖ associés aux applications locales 306₁-306ₖ et se trouvant entre le SAUL 314 et lesdites applications locales 306₁-306ₖ. Suivant des modes de réalisation, chaque reverse-proxy 316ᵢ est dédié à une unique application locale 306ᵢ : dans ce cas k=m. Suivant des modes de réalisation, au moins un reverse-proxy 316ᵢ peut être associé à plusieurs des applications locales 306₁-306ₖ : dans ce cas k<m.

Les composants du système 300 sont configurés pour mettre en oeuvre le procédé selon l'invention, et en particulier le procédé 100 de la FIGURE 1 ou le procédé 200 de la FIGURE 2.

Bien entendu, le système 300 peut comprendre d'autres composants que ceux décrits ici.

Bien entendu, l'invention n'est pas limitée aux exemples détaillés décrits ci-dessus. De nombreuses variantes peuvent être imaginées pour ces exemples sans sortir du cadre de l'invention telle que définie dans les revendications principales.

## Revendications

1. Procédé (100;200) de gestion d'accès à une application (306₁-306ₘ), dite locale, se trouvant au sein d'un réseau informatique (308) et ne prenant pas en charge une authentification par fédération d'identité, ledit procédé (100;200) comprenant une phase d'authentification (120;202) comprenant les étapes suivantes :
- authentification (130;206) dudit utilisateur (302₁-302ₙ) par un serveur IDAAS (310) se trouvant à l'extérieur dudit réseau informatique (308) ;
- en cas d'authentification réussie, génération (132) d'un message authentification comprenant :
▪ une liste, dite première liste, d'applications autorisées pour ledit utilisateur (302₁-302ₙ), et
▪ pour chaque application (306₁-306ₘ), une donnée d'autorisation associée audit utilisateur (302₁-302ₙ) ;
- transmission (134) dudit message d'authentification vers un serveur d'authentification local (314), se trouvant dans ledit réseau informatique (308) ; et
- lorsque ladite application locale (306₁-306ₘ) est mentionnée dans ladite première liste, transmission (142) de la donnée d'autorisation associée audit utilisateur pour ladite application à un reverse-proxy (316₁-316ₖ) gérant l'accès dudit utilisateur (302₁-302ₙ) à ladite application (306₁-306ₘ).

2. Procédé (100;200) selon la revendication 1, **caractérisé en ce qu'**il comprend une étape (122;208) de choix, ou d'indication, par l'utilisateur de l'application locale (306₁-306ₘ).

3. Procédé (100) selon la revendication précédente, **caractérisé en ce que** l'étape de choix (122) de l'application locale (306₁-306ₘ) est réalisée avant l'étape d'authentification (130), par exemple par saisie ou sélection d'une URL de ladite application locale (306₁-306ₘ).

4. Procédé (100) selon la revendication précédente, **caractérisé en ce qu'**il comprend, suite à l'étape de choix (122) de l'application locale (306₁-306ₘ), les étapes suivantes :
- redirection(124) dudit utilisateur (302₁-302ₙ) vers le serveur d'authentification local (314), par le reverse-proxy (316₁-316ₖ),
- redirection (128) dudit utilisateur (302₁-302ₙ) vers le serveur IDAAS (310), par le serveur d'authentification local (314) ;
en vue de la réalisation de l'étape d'authentification (130).

5. Procédé (200) selon la revendication 2, **caractérisé en ce que** l'étape de choix (208) de l'application locale est réalisée **après** l'étape d'authentification (206), par exemple par sélection de ladite application locale (306₁-306ₘ) sur le serveur IDAAS (310).

6. Procédé (200) selon la revendication précédente, **caractérisé en ce qu'**il comprend, suite à l'étape de choix (208) de l'application locale, les étapes suivantes :
- redirection (208) dudit utilisateur (302₁-302ₙ) vers l'adresse URL de ladite application locale (306₁-306ₘ),
- redirection (124) dudit utilisateur (302₁-302ₙ) vers le serveur d'authentification local (314), par le reverse-proxy (316₁-316ₖ),
- redirection (128), dudit utilisateur (302₁-302ₙ) vers le serveur IDAAS (310), par le serveur d'authentification local (314) ;
en vue de la réalisation de l'étape (132) de génération du message d'authentification.

7. Procédé (100;200) selon l'une quelconque des revendications précédentes, **caractérisé en ce que** le message d'authentification comprend en outre au moins l'une des données suivantes :
- une liste, dite deuxième liste, d'applications associée au domaine du serveur d'authentification local (314), et/ou
- un numéro de version de la configuration du serveur IDAAS (310) ;
au moins une des données étant utilisée pour vérifier la synchronisation entre le serveur IDAAS (310) et le serveur d'authentification local (314).

8. Procédé (100;200) selon l'une quelconque des revendications précédentes, **caractérisé en ce qu'**il comprend, avant la phase d'authentification (120;202), une phase (102) d'enregistrement comprenant une étape (104) de configuration d'un reverse-proxy (316₁-316ₖ) pour l'application locale (306₁-306ₘ).

9. Procédé (100;200) selon la revendication précédente, **caractérisé en ce que** la phase d'enregistrement (102) comprend une étape (108) de déclaration, au serveur IDAAS (310), de la première liste.

10. Procédé (100;200) selon l'une quelconque des revendications 8 ou 9 et la revendication 7, **caractérisé en ce que** la phase d'enregistrement (102) comprend une étape (110) de déclaration, au serveur IDAAS (310), de la deuxième liste.

11. Procédé (100;200) selon l'une quelconque des revendications précédentes, **caractérisé en ce que** le reverse-proxy (316₁-316ₖ) :
- est dédié à l'application locale (306₁-306ₘ), ou
- est commun à l'application locale (306₁-306ₘ) et à au moins une autre application locale (306₁-306ₘ), ledit reverse-proxy (316₁-316ₖ) exécutant un mécanisme de réécriture d'URLs configuré pour ajouter un préfixe d'URL pour chacune desdites applications (306₁-306ₘ).

12. Programme d'ordinateur comprenant des instructions informatiques, qui lorsqu'elles sont exécutées par ordinateur, mettent en oeuvre les étapes du procédé (100;200) selon l'une quelconque des revendications précédentes.

13. Système (300) de gestion d'accès à une application (306₁-306ₘ), dite locale, se trouvant au sein d'un réseau informatique (308) et ne prenant pas en charge une authentification par fédération d'identité, ledit système (300) comprenant :
- un serveur d'authentification local (314) dans ledit réseau informatique (308),
- au moins un reverse-proxy (316₁-316ₖ) dans ledit réseau informatique (308), et
- un serveur IDAAS (310) ;
configurés pour mettre en oeuvre toutes les étapes du procédé (100;200) selon l'une quelconque des revendications 1 à 11.
